# EUROPÄISCHE PATENTANMELDUNG

(11) **EP 4 431 835 A1**
(43) Veröffentlichungstag der Anmeldung: **18.09.2024**
(21) Anmeldenummer: 23162275.4
(22) Anmeldetag: 16.03.2023
(51) Int. Cl.: F24S 25/10, F24S 25/12, F24S 25/617, H02S 20/10

(54) **ANORDNUNG MIT ZUMINDEST EINEM, INSBESONDERE PLATTENFÖRMIGEN, PHOTOVOLTAIKMODUL**

(71) Anmelder: ZENDRA AG, 7004 Chur (CH)
(72) Erfinder: Baselgia, David, 7012 Felsberg (CH); Forster, Markus, 7000 Chur (CH)
(74) Vertreter: Torggler & Hofmann Patentanwälte - Rankweil

(57) **Zusammenfassung**

Anordnung (1) mit zumindest einem, insbesondere plattenförmigen, Photovoltaikmodul (2) zur Erzeugung von elektrischem Strom aus Sonnenlicht und einer Unterkonstruktion (3), wobei die Unterkonstruktion (3) einen Befestigungsabschnitt (4) aufweist, an dem das Photovoltaikmodul (2) befestigt ist, wobei die Unterkonstruktion (3) zusätzlich zum Befestigungsabschnitt (4) zumindest zwei in sich längserstreckte Träger (5) und zumindest zwei in sich längserstreckte Stützen (6) und die Anordnung (1) zusätzlich zumindest vier Fußelemente (7) aufweist und jeder der Träger (5) und jede der Stützen (6) in einer fertig montierten Betriebsstellung der Anordnung (1) jeweils mittels eines lösbaren Schwenkgelenks (8) mit einem der Fußelemente (7) verbunden ist.

## Beschreibung

Die vorliegende Erfindung betrifft eine Anordnung mit zumindest einem, insbesondere plattenförmigen, Photovoltaikmodul zur Erzeugung von elektrischem Strom aus Sonnenlicht und einer Unterkonstruktion, wobei die Unterkonstruktion einen Befestigungsabschnitt aufweist, an dem das Photovoltaikmodul befestigt ist. Darüber hinaus betrifft die Erfindung auch ein Verfahren zur Montage einer solchen Anordnung.

Im Kampf gegen die Klimaerwärmung ist es ein wichtiger Baustein, die Erzeugung von elektrischem Strom aus Sonnenlicht mittels Photovoltaikmodulen weiter auszubauen. Üblicherweise werden gattungsgemäße Anordnungen mit entsprechenden Photovoltaikmodulen beim Stand der Technik auf und an Gebäuden, insbesondere auf deren Dächern, montiert. Die Unterkonstruktionen sind in der Regel beim Stand der Technik für diese Art der Montage ausgelegt. Es gibt bereits aber auch Freilandanlagen mit Photovoltaikmodulen, bei denen die Unterkonstruktion so ausgebildet ist, dass die Photovoltaikmodule im Freiland, zum Beispiel auf einer Wiese oder einem ehemaligen Acker, aufgestellt werden können.

Im hochalpinen Bereich, insbesondere in Höhen über 2000 m über Normalnull, werden bislang Photovoltaikmodule meist nur auf Dächern von Berghütten oder dergleichen montiert. Die Gewinnung von elektrischem Strom aus Sonnenlicht mittels Photovoltaikmodulen in diesen Höhenbereichen verspricht aber eine besonders hohe Effektivität, da einerseits in diesen Höhen, über das Jahr betrachtet, weniger Bewölkung als im Flachland vorliegt. Andererseits haben Photovoltaikmodule besonders dann einen hohen Wirkungsgrad, wenn die Außentemperaturen gering sind, so wie dies im hochalpinen Bereich in der Regel der Fall ist. Zusätzlich steigern die Reflexionen des Sonnenlichts im Schnee die mit den Photovoltaikmodulen erzielbare Stromausbeute. Andererseits sind beim Aufbau von Photovoltaikmodulen im hochalpinen Bereich allerdings auch einige Herausforderungen zu bewältigen, die im Flachland so nicht gegeben sind. Vor allem ist im hochalpinen Bereich über einen längeren Zeitraum im Jahr mit Schneehöhen von zum Beispiel bis zu 3 bis 4 Metern zu rechnen, sodass die Photovoltaikmodule entsprechend hoch über dem Untergrund angeordnet werden müssen, um nicht langfristig von Schnee verdeckt zu sein. Eine andere Herausforderung besteht im hochalpinen Bereich in erheblichen Windlasten, die auf die Photovoltaikmodule einwirken und deutlich stärker als im Flachland sind. Vor allem besteht aber für den hochalpinen Einsatz auch die Herausforderung, wie eine gattungsgemäße Anordnung in diesem Bereich überhaupt effektiv montiert werden kann.

Aufgabe der Erfindung ist es daher, eine Anordnung der oben genannten Art dahingehend zu verbessern, dass sie für den Einsatz im hochalpinen Bereich geeignet ist und dort gut montiert werden kann.

Zur Lösung der Aufgabe sieht die Erfindung eine Anordnung gemäß Patentanspruch 1 vor.

Es ist somit erfindungsgemäß vorgesehen, dass die Unterkonstruktion zusätzlich zum Befestigungsabschnitt zumindest zwei in sich längserstreckte Träger und zumindest zwei in sich längserstreckte Stützen und die Anordnung zusätzlich zumindest vier Fußelemente aufweist und jeder der Träger und jede der Stützen in einer fertig montierten Betriebsstellung der Anordnung jeweils mittels eines lösbaren Schwenkgelenks mit einem der Fußelemente verbunden ist.

Eine erfindungsgemäße Anordnung kann ein einziges Photovoltaikmodul aufweisen. In der Regel wird die Anordnung aber mit mehreren Photovoltaikmodulen ausgestattet sein. Das oder die Photovoltaikmodule sind bevorzugt plattenförmig ausgebildet. Die für die Aufnahme des Sonnenlichts vorgesehene Oberfläche desjeweiligen Photovoltaikmoduls ist bevorzugt eben ausgebildet. Im Falle von mehreren Photovoltaikmodulen können diese in einer Ebene am Befestigungsabschnitt der Unterkonstruktionen angebracht werden. Der Befestigungsabschnitt ist jedenfalls der Bereich der Unterkonstruktion, an dem das oder die Photovoltaikmodule angebracht wird bzw. werden.

Durch eine entsprechend lange Ausbildung der in sich längserstreckten Träger und Stützen der Unterkonstruktion ist es zunächst einmal möglich, die Photovoltaikmodule in der Höhe über dem Untergrund anzuordnen, dass sie je nach lokalen Gegebenheiten des Aufstellorts der Anordnung im Hochgebirge über das ganze Jahr in der Regel aus der Schneedecke hervorstehen und so über das ganze Jahr Sonnenlicht in elektrischen Strom verwandeln können. Um die im Hochgebirge auftretenden Windlasten aufnehmen zu können, werden die längs erstreckten Träger und auch die längs erstreckten Stützen je nach Ausführungsform der erfindungsgemäßen Anordnung so ausgebildet, dass sie den entsprechenden Zug- und/oder Druckbelastungen, welche bei den lokalen Gegebenheiten zu erwarten sind, standhalten.

Die Verwendung der lösbaren Schwenkgelenke zur Verbindung der Träger und Stützen mit den Fußelementen hat zwei wesentliche Vorteile. Zum einen wird verhindert, dass Drehmomente zwischen dem jeweiligen Fußelement und dem jeweiligen Träger sowie zwischen dem jeweiligen Fußelement und der jeweiligen Stütze übertragen werden. Zum anderen erlauben die lösbaren Schwenkgelenkte eine besonders einfache und effektive Montage erfindungsgemäßer Anordnungen im Hochgebirge, z.B. auch mittels Hubschrauber. Hierzu kann ein erfindungsgemäßes Verfahren eingesetzt werden, welches weiter unten noch im Detail erläutert wird.

Der Begriff des lösbaren Schwenkgelenks ist dahingehend zu verstehen, dass das Schwenkgelenk zumindest zwei Gelenkteile aufweist, welche im verbundenen Zustand gelenkig miteinander verbunden sind und eben das Schwenkgelenk ausbilden. Diese zumindest zwei Gelenkteile des lösbaren Schwenkgelenks können aber auch voneinander getrennt, also voneinander gelöst und wieder miteinander verbunden werden. Dies erlaubt es, eines der Gelenkteile des jeweiligen Schwenkgelenks am jeweiligen Fußelement vorzusehen und das andere Gelenkteil des Schwenkgelenks jeweils an einem längserstreckten Träger oder längserstreckten Stützen anzuordnen, sodass beim Verbinden der Träger und Stützen mit den Fußelementen das lösbare Schwenkgelenk bei der Montage der Anordnung im Hochgebirge vor Ort zusammengesetzt werden kann.

Eine erfindungsgemäße Anordnung könnte man auch als eine Photovoltaikanordnung bezeichnen.

Um die Photovoltaikmodule optimal zur Sonne ausrichten zu können, sehen bevorzugte Ausgestaltungsformen der Erfindung vor, dass jeder der Träger starr mit dem Befestigungsabschnitt verbunden ist, wobei die Träger und der Befestigungsabschnitt, in einer Seitenansicht auf die Anordnung gesehen, jeweils einen Winkel in einem Winkelbereich von 105° bis 180°, vorzugsweise von 135° bis 165°, miteinander einschließen.

Die Unterkonstruktion wird dabei günstigerweise so im Gelände montiert, dass die Träger in der fertig montierten Betriebsstellung vertikal verlaufen oder, in einem Winkelbereich von +/- 20°, vorzugsweise von +/- 10°, um die Vertikale verlaufend, angeordnet sind.

Günstig ist es auch, wenn jeweils einer der Träger mit jeweils zumindest einer der Stützen, vorzugsweise unlösbar, gelenkig verbunden ist. Die gelenkige Verbindung zwischen Stützen und Träger erlaubt es, den Winkel zwischen der jeweiligen Stütze und dem jeweiligen Träger an die entsprechenden Abstände der ihm zugeordneten Fußelemente einfach anzupassen. Dies vereinfacht die Montage vor Ort. Dass diese gelenkige Verbindung zwischen der jeweiligen Stütze und dem jeweiligen Träger unlösbar ausgebildet ist, hat den Vorteil, dass die gesamte Anordnung, wie weiter unter noch im Detail erläutert, an einem Hubschrauber hängend zum Ort der Montage geflogen werden kann, ohne dass die Stützen dabei verloren gehen könnten.

Im Sinne eines stabilen Abstützens der Unterkonstruktion auf dem Untergrund sehen bevorzugte Varianten der Erfindung vor, dass die Träger in einer Richtung orthogonal zu ihrer Längserstreckung voneinander distanziert angeordnet sind. Dies gilt bevorzugt auch für die Stützen.

Für die Ausbildung der lösbaren Schwenkgelenke, mit denen die Träger und Stützen mit den jeweiligen Fußelementen verbunden werden, gibt es verschiedene Möglichkeiten. Eine bevorzugte davon sieht allerdings vor, dass jedes der lösbaren Schwenkgelenke einen Achsbolzen und eine bereichsweise gerundete Achsbolzenaufnahme zur schwenkbaren Lagerung des Achsbolzens aufweist. Günstig ist dabei, wenn jedes der lösbaren Schwenkgelenke eine sich, in Richtung von der Achsbolzenaufnahme weg, weitende und zur Achsbolzenaufnahme hinführende Einführöffnung für den jeweiligen Achsbolzen aufweist.

Um das lösbare Schwenkgelenk verriegeln aber auch lösen zu können, sehen bevorzugte Varianten der Erfindung vor, dass jedes der lösbaren Schwenkgelenke einen fixierbaren und wieder lösbaren Riegel zum lösbaren Einsperren des jeweiligen Achsbolzens in der jeweiligen Achsbolzenaufnahme aufweist.

Auch wenn dies andersherum auch möglich ist, so sehen bevorzugte Varianten der Erfindung vor, dass die Achsbolzen jeweils an einem der Träger oder an einer der Stützen fixiert oder ausgebildet sind und die Achsbolzenaufnahmen jeweils an einem der Fußelemente fixiert oder ausgebildet sind.

Die Achsbolzenaufnahme kann in bevorzugten Varianten der Erfindung aus einem u-förmigen Profil bestehen, in dessen vorzugsweise parallel zueinander verlaufenden Seitenwänden, die Achsbolzenaufnahmen und jeweils eine dorthin führende Einführöffnung angeordnet sind. Auch die lösbaren Riegel können an diesen Seitenwänden des u-förmigen Profils lösbar befestigt werden, um so den Achsbolzen in der jeweiligen Achsbolzenaufnahme einzusperren aber auch freigeben zu können.

In bevorzugten Varianten des nachfolgend noch genauer geschilderten Verfahrens zur Montage der erfindungsgemäßen Anordnung auf einem, vorzugsweise in einer Hangneigungsrichtung abfallenden, Untergrund ist vorgehen, dass zunächst die Fußelemente auf dem Untergrund montiert werden, bevor das Photovoltaikmodul zusammen mit der Unterkonstruktion an einem Hubschrauber hängend zu den Fußelementen geflogen wird. Zur Befestigung der Fußelemente auf dem Untergrund sehen bevorzugte Varianten der Erfindung vor, dass die Fußelemente in der fertig montierten Betriebsstellung der Anordnung direkt auf einem Untergrund abgestellt und mittels Bodenankern an dem Untergrund fixiert sind. Besonders bevorzugt wird bei dieser Montage der Fußelemente auf dem Untergrund auf ein Betonfundament verzichtet. Hierdurch kann vermieden werden, dass Beton in aufwendiger und teurer Art und Weise mittels Hubschrauber zum Montageort geflogen werden muss. Die Fußelemente können dabei auf die jeweilige Oberfläche des Untergrunds aufgestellt und dann mit den Bodenankern fixiert werden. Es ist aber auch möglich, zunächst entsprechend passende Löcher in den Untergrund zu graben und dann die Fußelemente dort etwas versenkt zu montieren. Dies bietet sich insbesondere dann an, wenn zunächst Lockermaterial entfernt wird, um das jeweilige Fußelement dann direkt auf felsigem Untergrund abstellen und dort mittels Bodenankern fixieren zu können. In der fertig montierten Stellung können die Fußelemente also sowohl vollständig über die Geländeoberkante überstehen, als auch teilweise in den Untergrund versenkt angeordnet sein.

Bevorzugte Varianten sehen jedenfalls vor, dass die, ein jeweiliges der Fußelemente am Untergrund fixierenden, Bodenanker im Untergrund in einem spitzen Winkel zueinander verlaufend und/oder, in Richtung vom jeweiligen Fußelement (7) weg, auseinanderlaufend angeordnet sind. Die Träger müssen in der fertig montierten Betriebsstellung der Anordnung zunächst einmal die durch das Gewicht der Anordnung und gegebenenfalls durch aufliegenden Schnee entstehenden Druckbelastungen aushalten. Durch die an der Anordnung und insbesondere an den Photovoltaikmodulen angreifenden Windlasten kann es aber auch zu entsprechenden Zugbelastungen der Träger kommen. Für den anvisierten Einsatz im Hochgebirge sehen bevorzugte Varianten der erfindungsgemäßen Anordnung in diesem Zusammenhang vor, dass die Träger bei einer Zugbelastung in einer Richtung ihrer Längserstreckung jeweils einen Normalkraftwiderstand von zumindest 700 kN (kiloNewton), vorzugsweise von zumindest 1300 kN, aufweisen, und/oder dass die Träger bei einer Druckbelastung in einer Richtung ihrer Längserstreckung jeweils einen Normalkraftwiderstand von zumindest 200 kN, vorzugsweise von zumindest 700 kN, aufweisen.

Je nach Ausbildung der erfindungsgemäßen Anordnung kann es auch bei den Stützen dazu kommen, dass sie sowohl Zugbelastungen als auch Druckbelastungen standhalten müssen. Auch diese Druck- und Zugbelastungen entstehen zum größten Teil durch die an der Anordnung, insbesondere an den Photovoltaikmodulen, angreifende Windlast. Für einen Einsatz der erfindungsgemäßen Anordnung im alpinen Hochgebirge ist in diesem Zusammenhang günstiger Weise vorgesehen, dass die Stützen bei einer Zugbelastung in einer Richtung ihrer Längserstreckung jeweils einen Normalkraftwiderstand von zumindest 300 kN, vorzugsweise von zumindest 800 kN, aufweisen, und/oder dass die Stützen bei einer Druckbelastung in einer Richtung ihrer Längserstreckung jeweils einen Normalkraftwiderstand von zumindest 50 kN, vorzugsweise von zumindest 700 kN, aufweisen.

Insbesondere durch die im Hochgebirge zu erwartende Windlast müssen die Träger und Stützen aber auch so ausgebildet werden, dass sie entsprechenden Scherbelastungen und Biegelasten standhalten. In diesem Zusammenhang sehen bevorzugte Varianten der Erfindung vor, dass die Träger bei einer Scherbelastung in einer Richtung quer zu ihrer Längserstreckung jeweils einen Querkraftwiderstand von zumindest 140 kN, vorzugsweise von zumindest 250 kN, aufweisen, und/oder dass die Stützen bei einer Scherbelastung in einer Richtung quer zu ihrer Längserstreckung jeweils einen Querkraftwiderstand von zumindest 120 kN, vorzugsweise von zumindest 450 kN, aufweisen. Bezüglich der zu erwartenden Biegebelastungen ist günstigerweise vorgesehen, dass die Träger bei einer Biegebelastung um eine starke Achse ihres Querschnitts jeweils einen Momentenwiderstand von zumindest 25 kNm (kiloNewtonMeter), vorzugsweise von zumindest 80 kNm, aufweisen und/oder dass die Stützen bei einer Biegebelastung um eine starke Achse ihres Querschnitts jeweils einen Momentenwiderstand von zumindest 5 kNm, vorzugsweise von zumindest 25 kNm, aufweisen. Die starke Achse des Querschnitts des Trägers bzw. der Stütze ist jeweils die Achse, bei der der Träger bzw. die Stütze seinen bzw. ihren höchsten Momentenwiderstand aufweist.

Die genannten Normalkraftwiderstände, Querkraftwiderstände und Momentenwiderstände werden bevorzugt nach der Norm SIA263:2013 Stahlbau bestimmt. Das Bemessungsniveau bei der Auslegung und Berechnung dieser Widerstandswerte ist günstigerweise so gewählt, dass die entsprechenden Sicherheitsbeiwerte mit einkalkuliert sind.

Auch wenn erfindungsgemäße Anordnungen grundsätzlich auch auf ebenem Untergrund also im Flachland montiert werden können, so sind sie, wie eingangs bereits erwähnt, aber speziell für den Einsatz im Hochgebirge ausgelegt. Dort trifft man in der Regel an den, für die Montage vorgesehenen Orten in einer Hangneigungsrichtung abfallenden Untergrund an, auf dem die jeweilige Anordnung montiert werden muss. Bevorzugt erfolgt die Montage der erfindungsgemäßen Anordnung in Bereichen mit einem Hangneigungswinkel von höchsten 40°, vorzugsweise in einem Winkelbereich der Hangneigung von 20° bis 40°. Wie auch die bereits erwähnten Normalkraftwiderstände, Querkraftwiderstände und Momentenwiderstände der Träger und Stützen ist aber auch die Hangneigung, auf der die Anordnung montiert wird, vom Standort abhängig und kann von Standort zu Standort genauso variieren wie die dort zu erwartenden Rahmenbedingungen wie z.B. die zu erwartenden Schneehöhen und zu erwartenden Windlasten. Dies kann bei der Auslegung der jeweiligen Anordnung bzw. Anlage vom Fachmann entsprechend berücksichtigt werden. Wie die Anzahl der Photovoltaikmodule pro erfindungsgemäßer Anordnung kann auch die Fläche des Photovoltaikmoduls bzw. der Photovoltaikmodule der jeweiligen Anordnung variieren. Günstigerweise liegt diese Fläche im Bereich von 5 bis 16 m², vorzugsweise von 11 bis 16 m², pro Anordnung. Wie viele Photovoltaikmodule pro Anordnung zum Erreichen dieser Fläche notwendig sind, hängt auch von der Baugröße der einzelnen Photovoltaikmodule ab.

Neben der erfindungsgemäßen Anordnung an sich betrifft die Erfindung auch ein Verfahren zur Montage einer erfindungsgemäßen Anordnung auf einem Untergrund, wobei die Fußelemente zunächst direkt auf dem Untergrund abgestellt und an dem Untergrund fixiert werden und anschließend das Photovoltaikmodul zusammen mit der Unterkonstruktion an einem Hubschrauber hängend zu den Fußelementen geflogen und die Träger und die Stützen jeweils mittels des jeweiligen lösbaren Schwenkgelenks mit jeweils einem der Fußelemente verbunden werden. Bei dem Untergrund handelt es sich günstigerweise, wie bereits dargelegt, eben um einen in einer Hangneigungsrichtung abfallenden Untergrund, also, vereinfacht gesprochen, um eine Hanglage. Die Fußelemente werden, wie bereits oben erläutert, vorzugsweise ohne Betonfundament direkt auf dem Untergrund abgestellt. Dies umfasst auch die Varianten, in denen zunächst an den Stellen, wo die Fußelemente angeordnet werden sollen, insbesondere lockeres, Material vom Untergrund entfernt wird. Die Befestigung der Fußelemente an dem Untergrund bzw. auf dem Untergrund erfolgt günstigerweise ausschließlich mittels Bodenankern. Auf ein Betonfundament wird günstigerweise verzichtet. Bevorzugt ist vorgesehen, dass bei der Montage mittels Hubschrauber zunächst die Träger der Unterkonstruktion mit dem jeweiligen lösbaren Schwenkgelenk in die entsprechenden Fußelemente eingesetzt werden. Anschließend kann das Photovoltaikmodul mit der Unterkonstruktion vom Hubschrauber so weit abgesenkt werden, dass auch die Stützen mittels des jeweiligen lösbaren Schwenkgelenks mit den entsprechenden Fußelementen verbunden werden. Dabei ist günstigerweise vorgesehen, dass die Träger bzw. Stützen zunächst mit dem an ihnen angeordneten Achsbolzen in die entsprechenden Achsbolzenaufnahmen an den Fußelementen eingesetzt werden. Das Verriegeln mittels der lösbaren Riegel erfolgt dann anschließend. Damit sind die Achsbolzen dann in der jeweiligen Achsbolzenaufnahme eingesperrt, sodass nicht nur Druck- sondern auch Zugbelastungen über die Träger und/oder die Stützen und die Fußelemente in den Untergrund eingeleitet werden können. Durch die vorzugweise unlösbare gelenkige Verbindung zwischen jeweils einer Stütze und jeweils einem Träger, ist es möglich vor Ort den Winkel zwischen Stütze und Träger so einzustellen, dass diese optimal in die vorab auf dem Untergrund angebrachten Fußelemente eingesetzt werden können. Zur Befestigung der Träger und Stützen an den entsprechenden Fußelementen ist günstigerweise Bodenpersonal vor Ort vorhanden, welches die Träger und Stützen der, zusammen mit dem Photovoltaikmodul am Hubschrauber hängenden, Unterkonstruktion in die vorbereiteten Fußelemente einführt. Nach erfolgreichem Verbinden der Träger und Stützen mit den jeweiligen Fußelementen werden das Photovoltaikmodul und die Unterkonstruktion vom Hubschrauber gelöst, sodass dieser für weitere Montagearbeiten wieder zur Verfügung steht.

Weitere Merkmale und Einzelheiten der vorliegenden Erfindung werden nachfolgend exemplarisch anhand von erfindungsgemäßen Ausführungsbeispielen erläutert. Es zeigen:
Fig. 1 ein erstes Ausführungsbeispiel einer erfindungsgemäßen Anordnung in einer schematisierten Seitenansicht,
Fig. 2 das Detail A aus Fig. 1,
Fig. 3 bis 7 Abwandlungen dieses ersten Ausführungsbeispiels jeweils in Seitenansicht,
Fig. 8 eine Frontalansicht auf das erste erfindungsgemäße Ausführungsbeispiel,
Fig. 9 eine Detaildarstellung zu einem Fußelement für den Träger,
Fig. 10 eine Detaildarstellung zu einem Fußelement für die Stütze,
Fig. 11 und 12 weitere erfindungsgemäße Ausführungsformen einer Anordnung und
Fig. 13 bis 15 Darstellungen zur Erläuterung des erfindungsgemäßen Verfahrens zur Montage einer erfindungsgemäßen Anordnung.

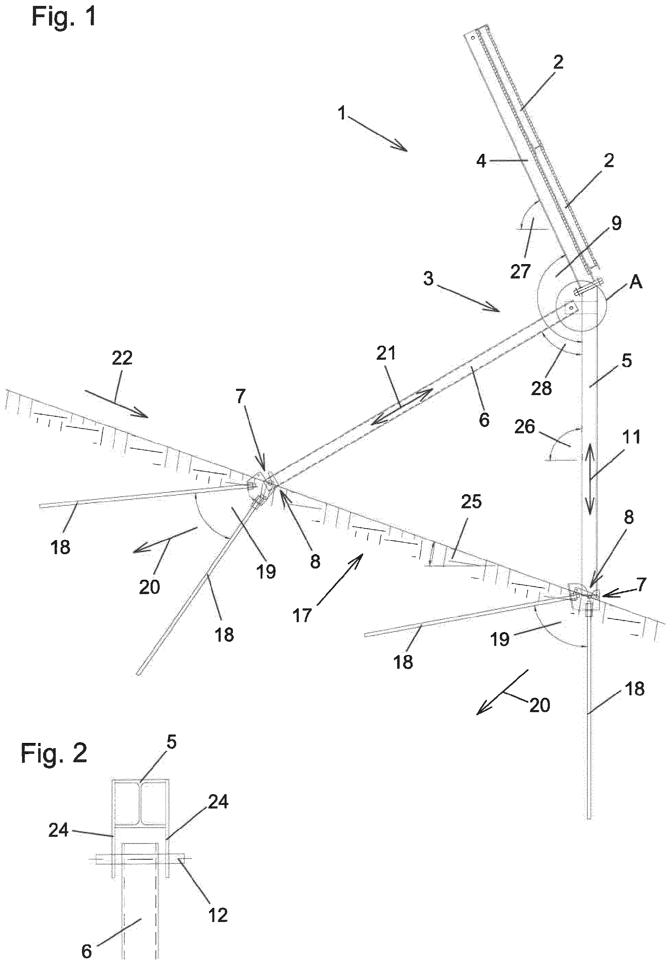

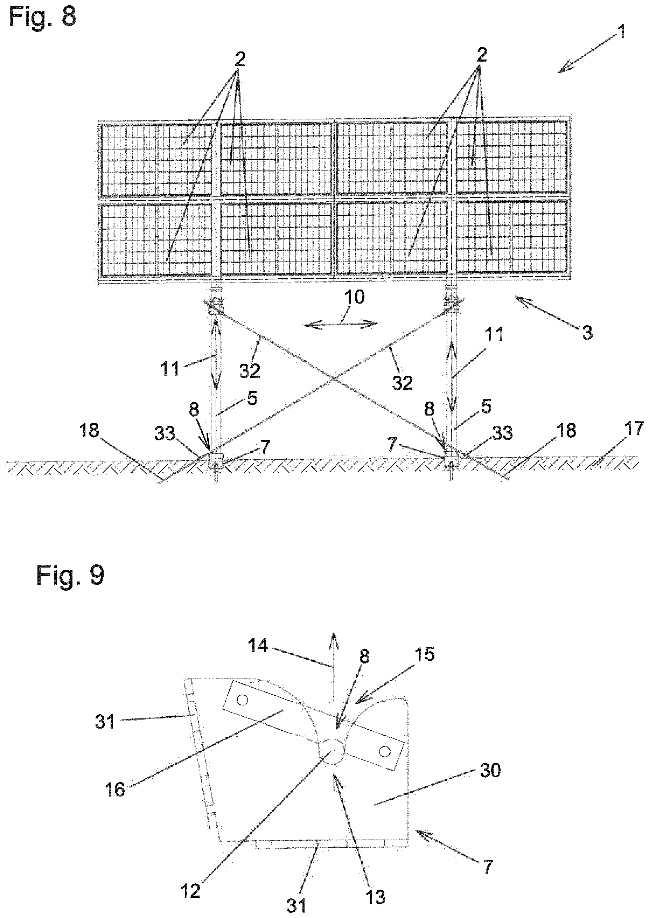

Das erste Ausführungsbeispiel einer erfindungsgemäßen Anordnung 1 ist in Fig. 1 in einer Seitenansicht und in Fig. 8 in einer Frontalansicht jeweils in der fertig montierten Betriebsstellung der Anordnung 1 dargestellt. Die Anordnung 1 dieses Ausführungsbeispiels weist, wie man in Fig. 8 sieht, mehrere Photovoltaikmodule 2 zur Erzeugung von elektrischem Strom aus Sonnenlicht auf, welche an dem Befestigungsabschnitt 4 der Unterkonstruktion 3 befestigt sind. Vorzugsweise sind die Photovoltaikmodule 2, wie hier auch dargestellt, plattenförmig ausgebildet. Wie eingangs erläutert, kann ihre Anzahl zwischen einem einzigen Photovoltaikmodul 2 und einer Vielzahl von Photovoltaikmodulen 2 pro Anordnung 1 variieren. Die Photovoltaikmodule 2 sind günstigerweise jeweils plattenförmig ausgebildet. Wie hier dargestellt, weisen sie meist eine ebene, dem Sonnenlicht zugewandte Oberfläche auf. Im Falle einer Vielzahl von Photovoltaikmodulen 2, wie hier, sind die Photovoltaikmodule 2 bevorzugt auch in einer gemeinsamen Ebene angeordnet.

Neben dem Befestigungsabschnitt 4, an dem das Photovoltaikmodul 2 oder die Photovoltaikmodule 2 befestigt ist bzw. sind, weist die Unterkonstruktion 3 in diesem Ausführungsbeispiel zusätzlich zwei, in sich längserstreckte Träger 5 und zwei in sich längserstreckte Stützen 6 auf. Darüber hinaus hat die Anordnung 1 in diesem Ausführungsbeispiel zusätzlich genau vier Fußelemente 7. Jeder der Träger 5 und jede der Stützen 6 ist in der in Fig. 1 und 8 dargestellten fertig montierten Betriebsstellung der Anordnung 1 jeweils mittels eines lösbaren Schwenkgelenks 8 mit einem der Fußelemente 7 verbunden. Jeder der Träger 5 ist starr mit dem Befestigungsabschnitt 4 der Unterkonstruktion 3 verbunden. In der Seitenansicht gem. Fig. 1 ist gut zu sehen, dass der Träger 5 und der Befestigungsabschnitt 4 einen Winkel 9 miteinander einschließen, welcher, wie eingangs bereits erläutert, günstigerweise in einem Winkelbereich von 105° bis 180°, vorzugsweise von 135° bis 165°, liegt.

Jede der Stützen 6 ist vorzugsweise unlösbar mit einem der Träger 5 gelenkig verbunden. Diese gelenkige Verbindung befindet sich in Fig. 1 in dem Bereich A, welcher in Fig. 2 genauer dargestellt ist. In Fig. 2 ist gut zu sehen, dass in diesem Ausführungsbeispiel am Träger 5 zwei Schenkel 24 angebracht sind. Die Stütze 6 ist mittels eines Achsbolzens 12 gelenkig und unlösbar mit den Schenkeln 24 und damit mit dem Träger 5 verbunden. Im Sinne einer unlösbaren Verbindung kann der Achsbolzen 12 z.B. mittels an sich bekannten Splinten an den Schenkeln 24 gegen unbeabsichtigtes Verlieren gesichert sein. Das Wort "unlösbar" meint, unabhängig von der konkreten Ausführungsform, also, dass die gelenkige Verbindung zwischen dem jeweiligen Träger 5 und der jeweiligen Stütze 6 gegen ein unbeabsichtigtes Lösen gesichert ist, und könnte in diesem Sinne auch durch "unverlierbar" oder durch "gegen unbeabsichtigtes Lösen gesichert" ersetzt werden. Das Wort "unlösbar" ist in diesem Sinne also nicht so zu verstehen, dass die gelenkige Verbindung zwischen dem jeweiligen Träger 5 und der jeweiligen Stütze 6 gar nicht gelöst werden kann. Diese unlösbare gelenkige Verbindung hat zum einen den Vorteil, dass die Stütze 6 während des Transports mit dem Hubschrauber 23, wie weiter hinten noch erläutert, nicht verloren gehen kann. Zum anderen erlaubt die gelenkige Verbindung zwischen Träger 5 und Stütze 6 aber vor allem auch die Anpassung des Zwischenwinkels 28 an den vor Ort gegebenen Abstand zwischen den Fußelementen 7.

In Fig. 1 ist gut zu erkennen, dass die erfindungsgemäße Anordnung 1 in diesem Ausführungsbeispiel auf einem, in der Hangneigungsrichtung 22 abfallenden Untergrund 17, also in anderen Worten in einer Hanglage, montiert ist. Der Hangneigungswinkel 25 beträgt in diesem ersten Ausführungsbeispiel 20°. Die Träger 5 sind in diesem ersten Ausführungsbeispiel in der fertig montierten Betriebsstellung vertikal ausgerichtet. Der Aufstellwinkel 26 gegen die Horizontale beträgt also in diesem Ausführungsbeispiel 90°.

Über den Winkel 9 zwischen Befestigungsabschnitt 4 und den Trägern 5 ergibt sich dann auch der Anstellwinkel 27 der Photovoltaikmodule 2 gegen die Horizontale. Dieser wird, je nach Standort der Anordnung 1, so gewählt, dass sich die optimale Sonnenlichtausbeute und damit Stromausbeute ergibt. Auch in diesem Ausführungsbeispiel sind die Fußelemente 7 in der in Fig. 1 dargestellten fertig montierten Betriebsstellung der Anordnung 1 ohne Betonfundament direkt auf dem Untergrund 17 abgestellt bzw. hier ein Stück weit in diesen versenkt. Die Fußelemente 7 sind jeweils mittels Bodenankern 18 in bzw. an dem Untergrund 17 fixiert. In Fig. 1 ist auch gut zu sehen, dass günstigerweise vorgesehen ist, dass die, ein jeweiliges der Fußelemente 7 am Untergrund 17 fixierenden, Bodenanker 18 im Untergrund 17 in einem spitzen Winkel 19 zueinander verlaufen und hier auch in Richtung 20 vom jeweiligen Fußelement weg auseinanderlaufend angeordnet sind. In Fig. 8 sind die Bodenanker 18 nicht dargestellt.

In Fig. 1 ist auch die Längserstreckung 11, oder in anderen Worten, die Längserstreckungsrichtung 11 des Trägers 5 eingezeichnet. Dargestellt ist auch die Längserstreckung 21 bzw. Längserstreckungsrichtung 21 der in Fig. 1 dargestellten Stütze 16. Die Träger 5 und Stützen 6 weisen bei einer entsprechenden Auslegung der Anordnung 1 bevorzugt die eingangs bereits erläuterten Normalkraftwiderstände, Querkraftwiderstände und Momentenwiderstände auf, sodass sie den zu erwartenden Schnee- und vor allem Windlasten im Hochgebirge widerstehen können.

In der Frontalansicht gemäß Fig. 8 sieht man gut, dass in diesem Ausführungsbeispiel die Unterkonstruktion 3 der erfindungsgemäßen Anordnung 1 genau zwei Träger 5 aufweist. Entsprechend sind in diesem Ausführungsbeispiel auch zwei Stützen 6 vorhanden, welche in Fig. 8 aber verdeckt hinter den Trägern 5 angeordnet und damit nicht sichtbar sind.

Im Sinne einer stabilen Aufstellung ist jedenfalls günstigerweise, wie hier auch realisiert, vorgesehen, dass die Träger 5 in einer Richtung 10 orthogonal zu ihrer Längserstreckung 11 voneinander distanziert angeordnet sind. Natürlich können aber bei erfindungsgemäßen Anordnungen 1 auch mehr Träger 5 und mehr Stützen 6 vorgesehen sein, wenn dies aus Festigungsgründen angezeigt erscheint.

Die in Fig. 8 dargestellten Zusatzstreben 32 sind optional und dienen, soweit vorhanden, als Windverband der weiteren Stabilisierung der Konstruktion. Sie können, wie in Fig. 8 dargestellt, mittels Muffen 33 und Bodenankern 18 im Untergrund 17 verankert sein und über die Muffen 33 gespannt werden. Die Anordnung der Zusatzstreben 32 über Kreuz dient vorrangig zur Stabilisierung der Konstruktion gegen entsprechenden Seitenwind aber auch gegen sonstige seitlich einwirkende Lasten.

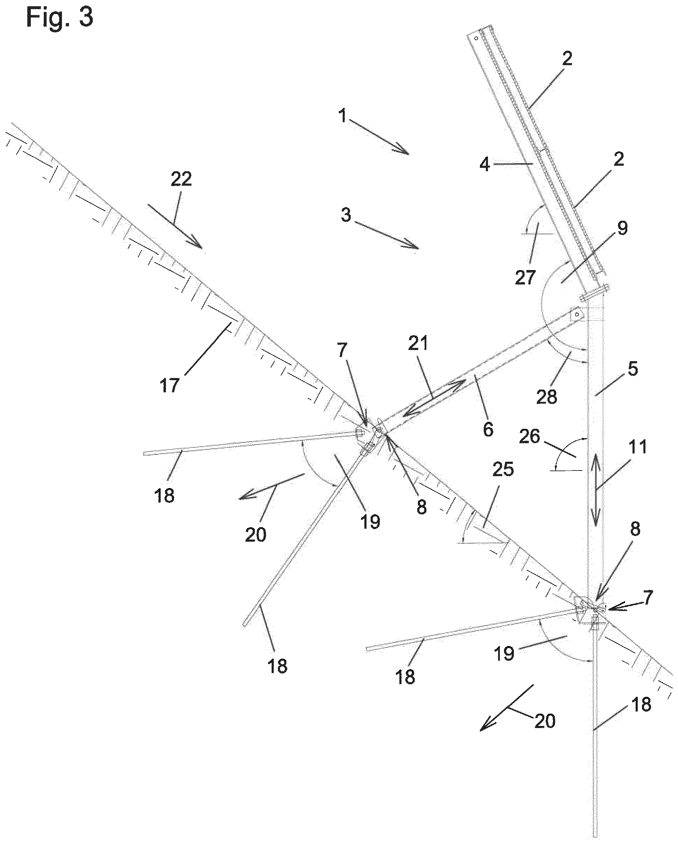

Fig. 3 zeigt nun ein zweites, zum ersten Ausführungsbeispiel sehr ähnliches, Ausführungsbeispiel einer erfindungsgemäßen Anordnung 1 ebenfalls in einer Seitenansicht. Hier werden, wie auch bei den nachfolgenden Ausführungsbeispielen, nur noch die Unterschiede zum ersten Ausführungsbeispiel erläutert. Ansonsten wird auf die Ausführungen zum ersten Ausführungsbeispiel verwiesen.

In Fig. 3 ist die Anordnung 1 auf einem, in Hangneigungsrichtung 22 stärker abfallenden, Untergrund 17 montiert. Konkret handelt es sich hier beim Hangneigungswinkel 25 um einen 40° Winkel. Auch hier in Fig. 3 sind die Träger 5 aber im fertig montierten Zustand vertikal ausgerichtet. Ihr Aufstellwinkel 26 gegen die Horizontale beträgt somit auch in diesem zweiten Ausführungsbeispiel 90°. Der Zwischenwinkel 28 zwischen der jeweiligen Stütze 6 und dem jeweiligen Träger 5 ist wiederum an den Abstand zwischen den Fußelementen 7 angepasst.

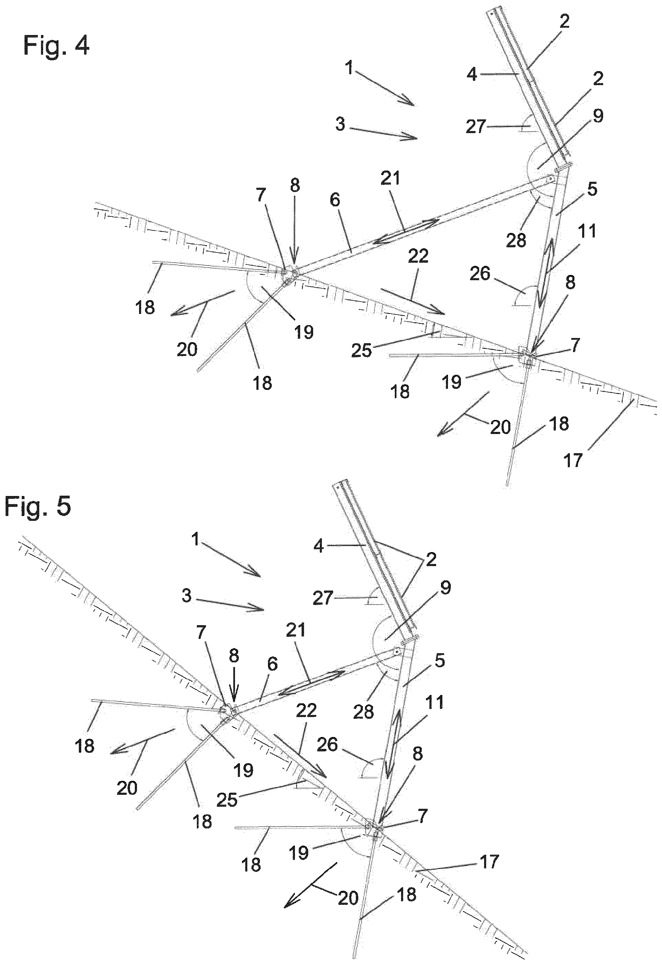

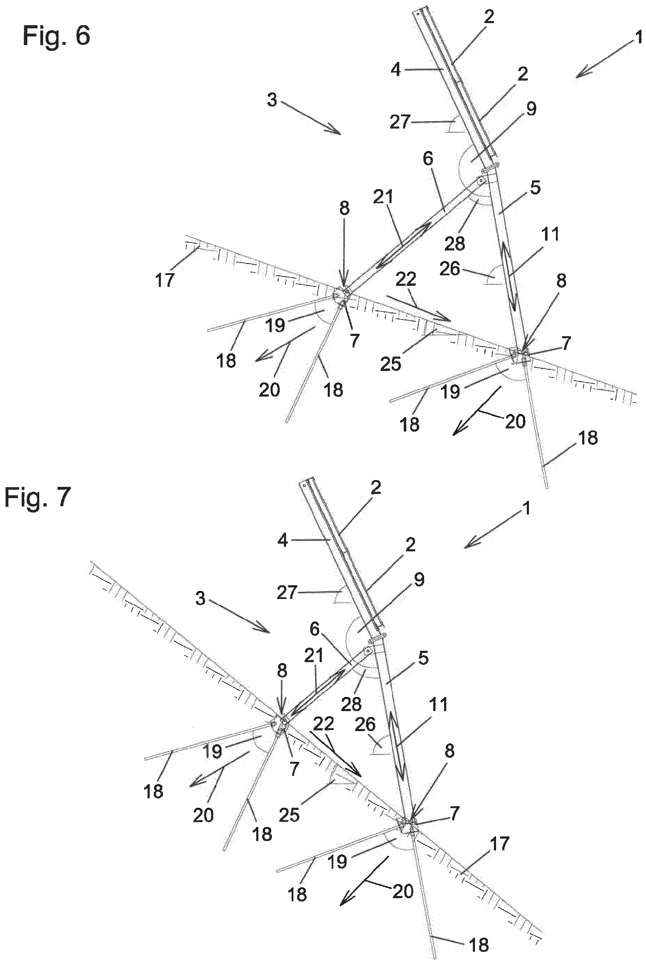

Die Fig. 4 bis 7 zeigen wiederum abgewandelte Ausgestaltungen von erfindungsgemäßen Anordnungen 1. Sie unterscheiden sich von den beiden ersten Ausführungsbeispielen im Wesentlich dadurch, dass in den Fig. 4 bis 7 die Träger 5 in der dargestellten, fertig montierten Betriebsstellung nicht vertikal verlaufen, sondern mit der Horizontalen in den Fig. 4 und 5 einen Aufstellwinkel 26 von 100° und in den Fig. 6 und 7 einen Aufstellwinkel 26 von 80° einschließen. Dies sind also Beispiele dafür, dass die erfindungsgemäßen Anordnungen 1 auch zum Hang hin und vom Hang weg geneigt aufgestellt werden können, sodass die Träger 5 nicht vertikal verlaufen. Durch die Wahl des entsprechenden Winkels 9 zwischen dem Befestigungsabschnitt 4 und den Trägern 5 kann auch bei solchen Ausgestaltungsformen der gewünschte Anstellwinkel 27 der Photovoltaikmodule 2 erreicht werden.

In den Fig. 4 und 6 beträgt der Hangneigungswinkel 25 jeweils 20°, in den Fig. 5 und 7 jeweils 40°.

In den bislang besprochenen Ausführungsbeispielen gemäß der Fig. 1 bis 8 entstehen, insbesondere durch entsprechende Windlasten, sowohl in den Trägern 5 als auch in den Stützen 6 sowohl Druck- als auch Zugbelastungen, welche je nach Windrichtung die Schwerkraft-bedingten Druckbelastungen erhöhen oder erniedrigen. Insbesondere in den Stützen 6 kann es bei entsprechender Windlast auch dazu kommen, dass die Druckbelastungen vollkommen kompensiert werden und nur Zugbelastungen wirken. Entsprechend sind in diesen Ausführungsbeispielen die Träger 5 und auch die Stützen 6 sowohl auf Zug- als auch auf Druckbelastungen auszulegen.

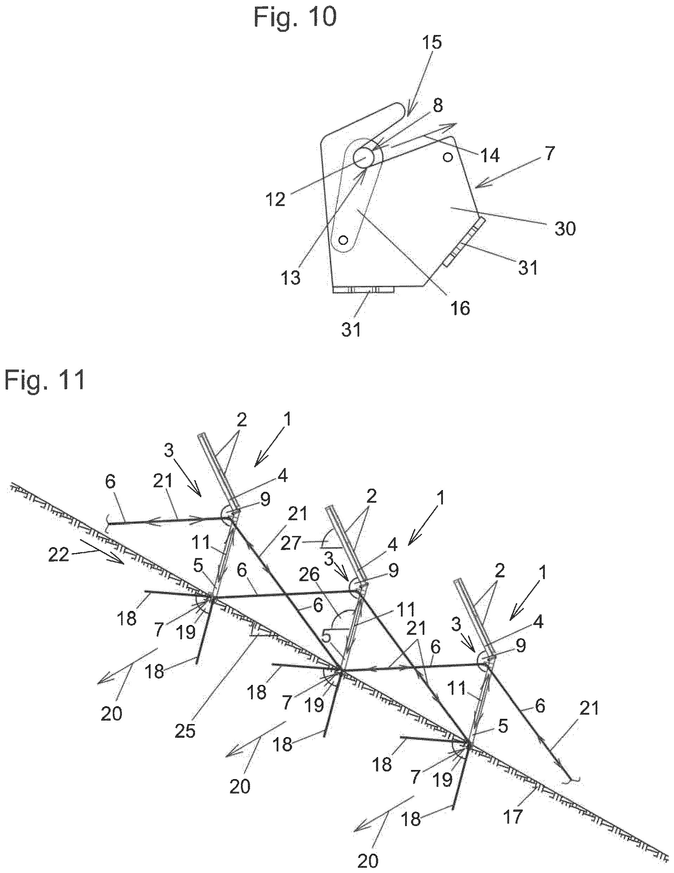

In den Fig. 9 und 10 sind Fußelemente 7 gezeigt, welche insbesondere für die Ausführungsbeispiele gemäß der Fig. 1 bis 8 dazu geeignet sind, die Unterkonstruktion 3 auf dem Untergrund 17 zu fixieren. Fig. 9 zeigt in einer Seitenansicht ein Fußelement 7, welches in den bislang geschilderten Ausführungsbeispielen dazu verwendet wird, einen Träger 5 auf bzw. am Untergrund 17 zu fixieren. Fig. 10 zeigt ein Fußelement 7 für eine der Stützen 6. Beide Fußelemente 7 sind jeweils Teil eines lösbaren Schwenkgelenks 8. Diese lösbaren Schwenkgelenke 8 umfassen jeweils einen Achsbolzen 12 und eine bereichsweise gerundete Achsbolzenaufnahme 13 zur verschwenkbaren Lagerung des jeweiligen Achsbolzens 12. Die Achsbolzenaufnahmen 13 weiten sich jeweils in Richtung 14 weg von der Achsbolzenaufnahme 13 und bilden so jeweils eine, zur Achsbolzenaufnahme 13 hinführende und sich zur Achsbolzenaufnahme 13 hin verjüngende Einführöffnung 15 für den jeweiligen Achsbolzen 12. Dargestellt ist auch der jeweilige Riegel 16, welcher am Fußelement 7 zum Beispiel durch eine Schraubverbindung lösbar befestigt sein kann. Der jeweilige Riegel 16 ist am jeweiligen Fußelement 7 fixierbar und wieder lösbar befestigt und dient dem Einsperren des jeweiligen Achsbolzens 12 in der jeweiligen Achsbolzenaufnahme 13. Hält der jeweilige Riegel 16 den jeweiligen Achsbolzen 12 fest, so ist das Schwenkgelenk verriegelt und der jeweilige Träger 5 bzw. die jeweilige Stütze 6 fest mit dem jeweiligen Fußelement 7 verbunden, sodass sowohl Zug- als auch Druckkräfte auf das jeweilige Fußelement 7 übertragen werden können. Ist der jeweilige Riegel 16 hingegen entfernt oder zumindest entsprechend gelockert, so kann der Achsbolzen 12 auch aus der jeweiligen Achsbolzenaufnahme 13 herausgenommen und so das Schwenkgelenk 8 gelöst werden. Bei der nachfolgend noch genauer erläuterten Montage der Anordnung 1 auf dem Untergrund 17 werden die Achsbolzen 12 zunächst in die Achsbolzenaufnahme 13 eingeführt und dann dort, wenn die Anordnung 1 ihre fertig montierte Betriebsstellung erreicht hat, fixiert, um so den Achsbolzen 12 in der Achsbolzenaufnahme 13 einzusperren. In den hier gezeigten Ausführungsbeispielen sind die Achsbolzen 12 jeweils an einem der Träger 5 oder an einer der Stützen 6 fixiert, oder ausgebildet. Die Achsbolzenaufnahmen 13 befinden sich jeweils an einem der Fußelemente 7. Dies könnte natürlich aber auch andersherum ausgebildet werden.

In den, in Fig. 9 und 10 gezeigten Beispielen weisen die Fußelemente 7 jeweils zwei Seitenwände 30 auf, welche voneinander beabstandet mittels Grundplatten 31 miteinander verbunden sind. In einer um 90° gedrehten Ansicht würde man jeweils sehen, dass eine der Grundplatten 31 mit den beiden Seitenwänden 30 eine u-förmige Konstruktion bilden. Die Achsbolzenaufnahmen 13 und die Einführöffnungen 15 sind in diesem Ausführungsbeispiel jeweils in den Seitenwänden 30 ausgebildet.

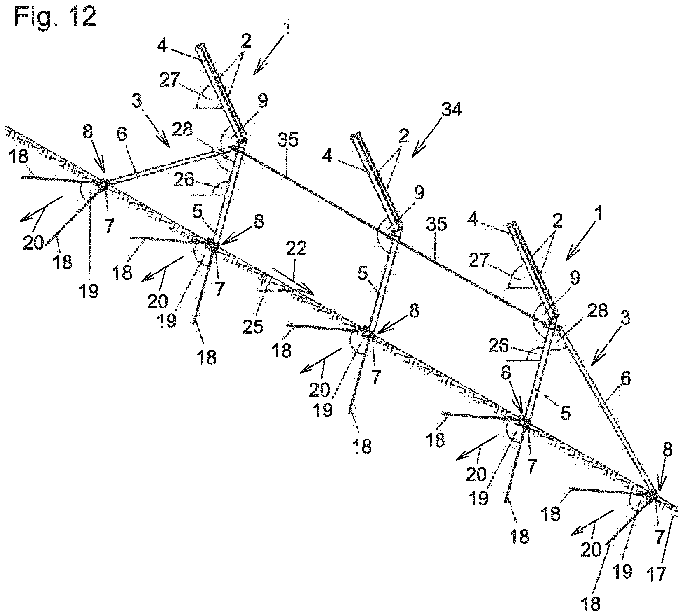

Die Fig. 11 und 12 zeigen nun beispielhaft, dass erfindungsgemäße Anordnungen 1 auch in einer Abfolge in Hangneigungsrichtung 22 hintereinander auf einem in Hangneigungsrichtung 22 abfallenden Untergrund 17 aufgebaut werden können. Auch diese Ausführungsbeispiele gemäß den Fig. 11 und 12 mit mehreren Anordnungen 1 weisen viele Merkmale der bisher bereits geschilderten Ausführungsbeispiele auf, sodass nur noch auf die Unterschiede eingegangen wird. Die Unterschiede bestehen in Fig. 11 im Wesentlichen in der Anzahl und Ausbildung der Stützen 6 sowie der Fußelemente 7. Im Ausführungsbeispiel gem. Fig. 11 sind an jedem Träger 5 zwei Stützen 6 unlösbar gelenkig angebracht. Jeweils eine dieser Stützen 6 verläuft entgegen der Hangneigungsrichtung 22 nach oben zu dem Fußelement 7 des Trägers 5 der darüber angeordneten Anordnung 1. Jeweils eine andere der Stützen 6 verläuft in Hangneigungsrichtung 22 nach unten zu dem Fußelement 7, in dem der Träger 5 der in dieser Richtung nächsten Anordnung 1 fixiert ist. Bei dieser Variante können die Stützen 6 so ausgelegt und gespannt werden, dass sie nur Zugbelastungen aufnehmen müssen. Natürlich können aber auch in diesem Beispiel die Stützen 6 so ausgelegt werden, dass sie zusätzlich auch Druckbelastungen aufnehmen können.

Die Fußelemente 7 müssen in dem Ausführungsbeispiel gem. Fig. 11 so ausgestaltet werden, dass sie jeweils drei lösbare Schwenkgelenke 8 realisieren können. Es wird jeweils ein lösbares Schwenkgelenk 8 für einen Träger 5 und zusätzlich werden zwei lösbare Schwenkgelenke 8 für zwei Stützen 6 pro Fußelement 7 benötigt. Bei der Ausbildung der lösbaren Schwenkgelenke 8 kann aber auch auf dieselbe Technologie zurückgegriffen werden, wie dies anhand von Fig. 9 und 10 erläutert wurde. Für die Ausgestaltung der Winkel 9, 19, 25, 26, 27 und 28 gelten dieselben Möglichkeiten wie bei den anhand der Fig. 1 bis 8 geschilderten Ausführungsbeispielen. In den Fig. 11 und 12 beträgt der Hangneigungswinkel 25 jeweils 30° und der Aufstellwinkel 26 gegen die Horizontale jeweils 105°.

Fig. 12 zeigt ein Beispiel, bei dem zwischen zwei erfindungsgemäßen Anordnungen 1 eine Zwischenanordnung 34 aufgestellt ist. Die erfindungsgemäßen Anordnungen 1 dieses Beispiels entsprechen in ihrem grundsätzlichen Aufbau den erfindungsgemäßen Anordnungen 1 gemäß der Fig. 1 bis 8 und müssen daher nicht noch einmal extra erläutert werden. Auch die Zwischenanordnung 34 stimmt mit den geschilderten erfindungsgemäßen Anordnungen 1 in den meisten Merkmalen überein. Der Unterschied besteht aber darin, dass anstelle der in entsprechenden Fußelementen 7 gelagerten Stützen 6 die Zwischenanordnung 34 mittels Spannstreben 35 zwischen die beiden erfindungsgemäßen Anordnungen 1 gespannt ist. Hierzu sind in diesem Beispiel die Spannstreben 35 sowohl an den Trägern 5 der erfindungsgemäßen Anordnungen 1 als auch an den Trägern 5 der Zwischenanordnung 34 gelenkig gelagert, wozu z.B. auch Gelenke, wie in Fig. 2 gezeigt, zum Einsatz kommen können. Der Vollständigkeit halber wird darauf hingewiesen, dass auch mehrere solche Zwischenanordnungen 34 hintereinander in analoger Art und Weise zwischen zwei oder mehr erfindungsgemäße Anordnungen 1 gespannt werden können.

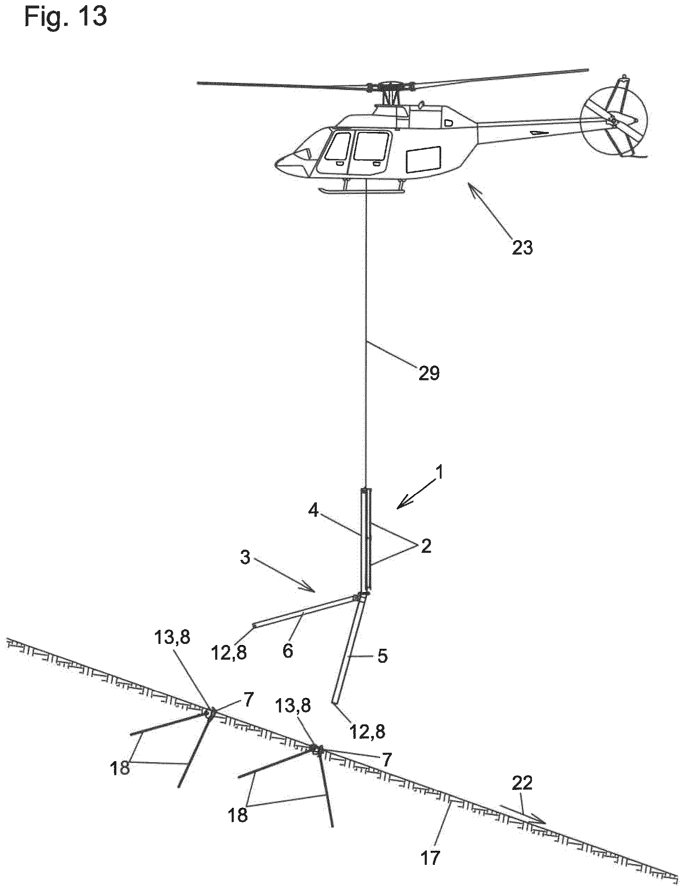

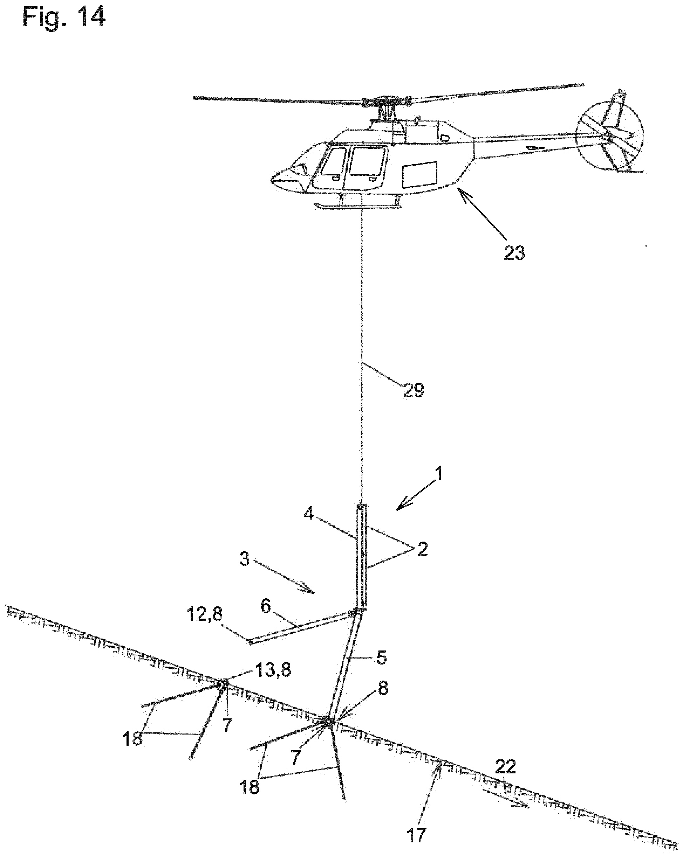

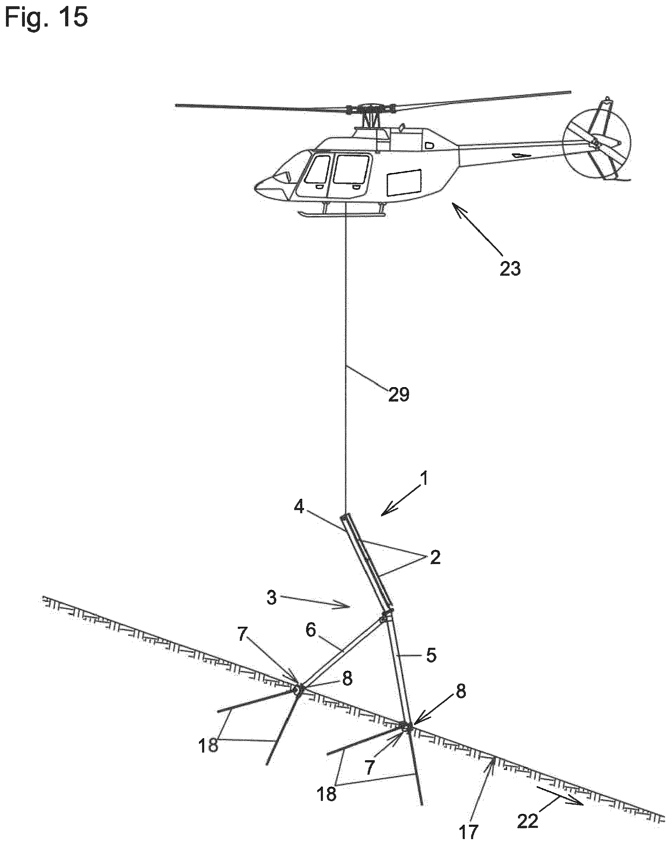

Die Fig. 13 bis 15 dienen der Veranschaulichung des erfindungsgemäßen Verfahrens zur Montage einer erfindungsgemäßen Anordnung 1 auf einem, in einer Hangneigungsrichtung 22 abfallenden Untergrund 17. Zunächst werden die Fußelemente 7, hier in diesem Ausführungsbeispiel ohne Betonfundament, direkt auf dem Untergrund 17 abgestellt und mittels Bohrankern 18 an dem Untergrund 17 fixiert. Dabei können die Fußelemente 7, wie eingangs bereits erläutert, auch ein Stück weit in den Untergrund 17 versenkt werden. Anschließend wird, wie in Fig. 13 gezeigt, das Photovoltaikmodul 2 zusammen mit der Unterkonstruktion 3 an einem Hubschrauber 23 hängend zu den Fußelementen 7 geflogen. Hierbei bietet es sich an, wie in Fig. 13 dargestellt, das oder die Photovoltaikmodule 2 zusammen mit der Unterkonstruktion 3 mittels eines Transportseils 29 unter den Hubschrauber 23 zu hängen. Dies ist eine übliche Art des Transports von Lasten mit Hubschraubern 23 und muss nicht weiter erläutert werden. Am Zielort angekommen wird dann, wie in Fig. 14 gezeigt, vorzugweise zunächst der Träger 5 mittels des entsprechenden lösbaren Schwenkgelenks 8 an dem entsprechend vorbereiteten Fußelement 7 befestigt. Hierbei kann vor Ort vorhandenes, hier nicht dargestelltes Bodenpersonal das Einführen des Trägers 5 mit seinem Achsbolzen 12 in die entsprechende Achsbolzenaufnahme 13 am Fußelement 7 unterstützen. Anschließend fliegt der Hubschrauber 23 noch ein Stück entgegen der Hangneigungsrichtung 17, sodass dann die entsprechenden Stützen 6, wie in Fig. 15 gezeigt, in die entsprechend vorbereiteten Fußelemente 7 eingesetzt und mittels der lösbaren Schwenkgelenke 8 dort verankert werden können. Die Verankerung der Träger 5 und Stützen 6 in den entsprechenden Fußelementen 7 erfolgt, wie oben beschrieben, bevorzugt durch die entsprechenden Riegel 16. Der Hubschrauber 23 kann, sobald die Anordnung 1 entsprechend aufgestellt ist, mit seinem Transportseil 29 von der Anordnung 1 getrennt werden und steht dann für weitere Transportaufgaben wieder zur Verfügung.

**Legende zu den Hinweisziffern:**

| | | | |
|---|---|---|---|
| 1 | Anordnung | 30 | Seitenwand |
| 2 | Photovoltaikmodul | 31 | Grundplatte |
| 3 | Unterkonstruktion | 32 | Zusatzstrebe |
| 4 | Befestigungsabschnitt | 33 | Muffe |
| 5 | Träger | 34 | Zwischenanordnung |
| 6 | Stütze | 35 | Spannstrebe |
| 7 | Fußelement | | |
| 8 | lösbares Schwenkgelenk | | |
| 9 | Winkel | | |
| 10 | Richtung | | |
| 11 | Längserstreckung | | |
| 12 | Achsbolzen | | |
| 13 | Achsbolzenaufnahme | | |
| 14 | Richtung | | |
| 15 | Einführöffnung | | |
| 16 | Riegel | | |
| 17 | Untergrund | | |
| 18 | Bodenanker | | |
| 19 | spitzer Winkel | | |
| 20 | Richtung | | |
| 21 | Längserstreckung | | |
| 22 | Hangneigungsrichtung | | |
| 23 | Hubschrauber | | |
| 24 | Schenkel | | |
| 25 | Hangneigungswinkel | | |
| 26 | Aufstellungswinkel | | |
| 27 | Anstellwinkel | | |
| 28 | Zwischenwinkel | | |
| 29 | Transportseil | | |

## Patentansprüche

1. Anordnung (1) mit zumindest einem, insbesondere plattenförmigen, Photovoltaikmodul (2) zur Erzeugung von elektrischem Strom aus Sonnenlicht und einer Unterkonstruktion (3), wobei die Unterkonstruktion (3) einen Befestigungsabschnitt (4) aufweist, an dem das Photovoltaikmodul (2) befestigt ist, **dadurch gekennzeichnet, dass** die Unterkonstruktion (3) zusätzlich zum Befestigungsabschnitt (4) zumindest zwei in sich längserstreckte Träger (5) und zumindest zwei in sich längserstreckte Stützen (6) und die Anordnung (1) zusätzlich zumindest vier Fußelemente (7) aufweist und jeder der Träger (5) und jede der Stützen (6) in einer fertig montierten Betriebsstellung der Anordnung (1) jeweils mittels eines lösbaren Schwenkgelenks (8) mit einem der Fußelemente (7) verbunden ist.

2. Anordnung (1) nach Anspruch 1, **dadurch gekennzeichnet, dass** jeder der Träger (5) starr mit dem Befestigungsabschnitt (4) verbunden ist, wobei die Träger (5) und der Befestigungsabschnitt (4), in einer Seitenansicht auf die Anordnung (1) gesehen, jeweils einen Winkel (9) in einem Winkelbereich von 105° bis 180°, vorzugsweise von 135° bis 165°, miteinander einschließen.

3. Anordnung (1) nach Anspruch 1 oder 2, **dadurch gekennzeichnet, dass** jeweils einer der Träger (5) mit jeweils zumindest einer der Stützen (6), vorzugsweise unlösbar, gelenkig verbunden ist.

4. Anordnung (1) nach einem der Ansprüche 1 bis 3, **dadurch gekennzeichnet, dass** die Träger (5) in einer Richtung (10) orthogonal zu ihrer Längserstreckung (11) voneinander distanziert angeordnet sind.

5. Anordnung (1) nach einem der Ansprüche 1 bis 4, **dadurch gekennzeichnet, dass** jedes der lösbaren Schwenkgelenke (8) einen Achsbolzen (12) und eine bereichsweise gerundete Achsbolzenaufnahme (13) zur schwenkbaren Lagerung des Achsbolzens (12) aufweist.

6. Anordnung (1) nach Anspruch 5, **dadurch gekennzeichnet, dass** jedes der lösbaren Schwenkgelenke (8) eine sich in Richtung (14) von der Achsbolzenaufnahme (13) weg weitende und zur Achsbolzenaufnahme (13) hinführende Einführöffnung (15) für den jeweiligen Achsbolzen (12) aufweist.

7. Anordnung (1) nach Anspruch 5 oder 6, **dadurch gekennzeichnet, dass** jedes der lösbaren Schwenkgelenke (8) einen fixierbaren und wieder lösbaren Riegel (16) zum lösbaren Einsperren des jeweiligen Achsbolzens (12) in der jeweiligen Achsbolzenaufnahme (13) aufweist.

8. Anordnung (1) nach einem der Ansprüche 5 bis 7, **dadurch gekennzeichnet, dass** die Achsbolzen (12) jeweils an einem der Träger (5) oder an einer der Stützen (6) fixiert oder ausgebildet sind und die Achsbolzenaufnahmen (13) jeweils an einem der Fußelemente (7) fixiert oder ausgebildet sind.

9. Anordnung (1) nach einem der Ansprüche 1 bis 8, **dadurch gekennzeichnet, dass** die Fußelemente (7) in der fertig montierten Betriebsstellung der Anordnung (1), vorzugsweise ohne Betonfundament, direkt auf einem Untergrund (17) abgestellt und mittels Bodenankern (18) an dem Untergrund (17) fixiert sind.

10. Anordnung (1) nach Anspruch 9, **dadurch gekennzeichnet, dass** die, ein jeweiliges der Fußelemente (7) am Untergrund (17) fixierenden, Bodenanker (18) im Untergrund (17) in einem spitzen Winkel (19) zueinander verlaufend und/oder, in Richtung (20) vom jeweiligen Fußelement (7) weg, auseinanderlaufend angeordnet sind.

11. Anordnung (1) nach einem der Ansprüche 1 bis 10, **dadurch gekennzeichnet, dass** die Träger (5) bei einer Zugbelastung in einer Richtung ihrer Längserstreckung (11) jeweils einen Normalkraftwiderstand von zumindest 700 kN, vorzugsweise von zumindest 1300 kN, aufweisen, und/oder dass die Träger (5) bei einer Druckbelastung in einer Richtung ihrer Längserstreckung (11) jeweils einen Normalkraftwiderstand von zumindest 200 kN, vorzugsweise von zumindest 700 kN, aufweisen.

12. Anordnung (1) nach einem der Ansprüche 1 bis 11, **dadurch gekennzeichnet, dass** die Stützen (6) bei einer Zugbelastung in einer Richtung ihrer Längserstreckung (21) jeweils einen Normalkraftwiderstand von zumindest 300 kN, vorzugsweise von zumindest 800 kN, aufweisen, und/oder dass die Stützen (6) bei einer Druckbelastung in einer Richtung ihrer Längserstreckung (21) jeweils einen Normalkraftwiderstand von zumindest 50 kN, vorzugsweise von zumindest 700 kN, aufweisen.

13. Anordnung (1) nach einem der Ansprüche 1 bis 12, **dadurch gekennzeichnet, dass** die Träger (5) bei einer Scherbelastung in einer Richtung quer zu ihrer Längserstreckung (11) jeweils einen Querkraftwiderstand von zumindest 140 kN, vorzugsweise von zumindest 250 kN, aufweisen, und/oder dass die Stützen (6) bei einer Scherbelastung in einer Richtung quer zu ihrer Längserstreckung (21) jeweils einen Querkraftwiderstand von zumindest 120 kN, vorzugsweise von zumindest 450 kN, aufweisen.

14. Anordnung (1) nach einem der Ansprüche 1 bis 13, **dadurch gekennzeichnet, dass** die Träger (5) bei einer Biegebelastung um eine starke Achse ihres Querschnitts jeweils einen Momentenwiderstand von zumindest 25 kNm, vorzugsweise von zumindest 80 kNm, aufweisen und/oder dass die Stützen (6) bei einer Biegebelastung um eine starke Achse ihres Querschnitts jeweils einen Momentenwiderstand von zumindest 5 kNm, vorzugsweise von zumindest 25 kNm, aufweisen.

15. Verfahren zur Montage einer Anordnung (1) nach einem der Ansprüche 1 bis 14 auf einem, vorzugsweise in einer Hangneigungsrichtung (22) abfallenden, Untergrund (17), wobei die Fußelemente (7) zunächst, vorzugsweise ohne Betonfundament, direkt auf dem Untergrund (17) abgestellt und, vorzugsweise mittels Bodenankern (18), an dem Untergrund (17) fixiert werden und anschließend das Photovoltaikmodul (2) zusammen mit der Unterkonstruktion (3) an einem Hubschrauber (23) hängend zu den Fußelementen (7) geflogen und die Träger (5) und die Stützen (6) jeweils mittels des jeweiligen lösbaren Schwenkgelenks (8) mit jeweils einem der Fußelemente (7) verbunden werden.
